# FASCICULE DE BREVET EUROPEEN

(11) **EP 2 199 890 B1**
(45) Date de publication et mention de la délivrance du brevet: **10.10.2012**
(21) Numéro de dépôt: 08305982.4
(22) Date de dépôt: 19.12.2008
(51) Int. Cl.: G06F 3/041, G06F 3/048, B60K 35/00, B60K 37/06, G06F 3/033

(54) **Dispositif à écran tactile à technologie diffractive**
Vorrichtung mit Berührungsbildschirm mit diffraktiver Technologie
Touch-screen device with diffractive technology

(43) Date de publication de la demande: 23.06.2010
(73) Titulaire: Delphi Technologies, Inc., Troy, MI 48007 (US)
(72) Inventeur: Ndao, Mandiaye, 67000 STRASBOURG (FR); Tupinier, Laurent, 67116 REICHSTETT (FR)
(74) Mandataire: Robert, Vincent

(56) Documents cités:
- WO-A2-2004/091956
- US-A- 5 151 696
- US-A1- 2003 021 032
- US-A1- 2007 080 948
- US-A1- 2008 180 654

## Description

La présente invention concerne un dispositif à écran tactile, qui affiche des organes de commande ou de contrôle virtuels à activation tactile, et est doté d'une manette de sélection multi positions permettant le changement de l'image affichée sur l'écran. La surface de ce dernier est par ailleurs munie de moyens pour la détection d'un contact et de l'emplacement de ce contact.

L'invention concerne par conséquent un écran reconfigurable sur lequel s'affiche, selon une arborescence classique en menus et sous-menus, des icones d'organes de contrôle et de commande d'équipements auxquels le dispositif de l'invention est connecté.

L'un des domaines d'application préférentiel de l'invention est l'automobile, secteur dans lequel l'augmentation rapide du nombre d'équipements embarqués dont la gestion est dévolue aux usagers suscite la création de systèmes de contrôle de plus en plus sophistiqués.

Ainsi, l'emploi de panneaux permettant un contrôle visuel d'un nombre croissant d'instruments présents à bord des véhicules se généralise. Ces panneaux permettent eux-mêmes la gestion d'un nombre de plus en plus important de fonctions ou de groupes de fonctions, impliquant la visualisation de leur état instantané et des possibilités offertes pour leur modulation ou changements d'état, au gré des utilisateurs.

Jusqu'ici, les panneaux de contrôle présentant un écran reconfigurable sont dans la plupart des cas réalisés à partir de technologies basées sur l'emploi de cristaux liquides, l'aspect commande tactile étant généralement mis en oeuvre au moyen d'un film capacitif recouvrant l'écran.

Cette technologie présente cependant un certain nombre des limitations, dont le coût élevé n'est pas la moindre.

Par ailleurs, l'utilisation d'écrans à cristaux liquides impose une géométrie plane de l'écran, alors qu'il serait souhaitable, du fait de la généralisation de ce type de dispositif de contrôle et de commande, de disposer d'une liberté de forme facilitant notamment l'ergonomie et l'implantation des dispositifs.

Enfin, cette technologie présente des limites également dans les possibilités de rendre plus compacts les dispositifs qui en sont issus, les rendant dès lors moins attrayants dans la perspective de l'optimisation de l'espace à l'intérieur des habitacles des véhicules.

On connaît aussi, par le document US2003/0021032A1, un système de commande comportant un dispositif de projection d'une interface de saisie virtuelle.

La présente invention remédie à ces inconvénients en proposant notamment une solution économiquement bien plus favorable, ouvrant par ailleurs et de façon simple la possibilité de concevoir des configurations compactes, avec une grande liberté dans le traitement des formes et volumes.

Pour remplir ces objectifs, et d'autres qui apparaîtront dans la suite du texte, le dispositif à écran tactile de l'invention se caractérise à titre essentiel en ce que l'image est obtenue sur l'écran par diffraction d'un premier faisceau laser sur un support diffractif mobile, doté de secteurs présentant chacun le codage d'une image à projeter sur l'écran, et dont le déplacement est commandé par la manette de sélection selon plusieurs positions discrètes permettant l'interférence d'un secteur avec le faisceau laser.

Le système de l'invention est donc basé sur une technologie diffractive, qui permet l'encodage de multiples images sur un même support par exemple plastique. Cette technologie est bien connue, bien maîtrisée et peu onéreuse, notamment parce que la duplication de tels supports plastiques est réalisable de manière simple et répétitive par des techniques conventionnelles comme le moulage par injection ou par embossage.

L'avantage prépondérant offert par une technologie diffractive réside dans la nature permanente et stable du signal diffracté dans l'espace, ne nécessitant en particulier aucune optique de mise au point de l'image, d'où par exemple la possibilité d'utiliser des écrans courbes etc.., et plus généralement la liberté conférée au concepteur dans la recherche de configurations adaptées aux applications automobiles.

De préférence, l'écran est éteint en l'absence de manipulation de l'organe de commande mécanique. Un contact, par exemple une simple pression, permet l'affichage d'un premier message de bienvenue. Ensuite, selon les déplacements conférés à la manette, et donc la position qui lui est donnée, l'écran se reconfigure par affichage d'images différentes.

Selon une possibilité, la manette de commande peut consister en une molette rotative entrainant un arbre auquel est solidarisé un disque formant le support diffractif. Le support diffractif est, dans cette hypothèse, mécaniquement relié à la molette, et toute action sur cette dernière entraine un changement de position dudit support.

Plus précisément, et selon une configuration plus complète, la molette peut être placée en bordure de l'écran placé au niveau de la façade du boîtier du dispositif, et l'arbre peut dans ce cas être orienté perpendiculairement au dit écran et au support diffractif, parallèlement au premier faisceau laser dont l'émetteur est placé au voisinage de ladite façade. Le signal diffracté par le support diffractif est alors envoyé vers une surface réfléchissante placée au voisinage du fond du boîtier et orientée pour réfléchir ledit signal en direction de l'écran.

Cette configuration compacte peut être installée en divers endroits du véhicule, par exemple sur le tableau de bord entre le conducteur du véhicule et le passager avant.

La molette et l'arbre qui lui est solidarisé peuvent être déplaçables dans plusieurs directions radiales, formant ainsi une manette de type joystick, chaque position radiale du joystick pouvant alors fournir une information redondante avec une information résultant de l'activation d'un organe de commande ou de contrôle virtuel de l'image affichée sur l'écran, image qui correspond à la position angulaire de la molette.

L'idée est que, pour des raisons de sécurité, l'utilisateur ne soit pas nécessairement obligé de regarder l'écran pour procéder à une commande ou à un contrôle via un organe virtuel, mais puisse au lieu de cela simplement exercer une action mécanique sur le joystick.

Par ailleurs, de préférence, le dispositif à écran tactile de l'invention peut comporter un capteur de position optique apte à mesurer la position du support diffractif et constitué d'une source de lumière émettant un second faisceau laser interférant avec des zones du support diffractif distinctes de celles qui interfèrent avec le premier faisceau laser, lesdites zones comprenant des cellules de codage de la position du support diffractif, le signal diffracté étant détecté en aval du support par un dispositif de détection connu en soi. Il peut par exemple s'agir d'une succession de cellules de détection placées dans la portée du signal diffracté.

Ce capteur de position donne une information précise sur la position du support diffractif, constituant une confirmation de l'information le cas échéant donnée par la position du joystick ou plus généralement de la manette de sélection mécanique.

Dans cette hypothèse, les cellules de codage du support diffractif peuvent être constituées d'hologrammes générés par ordinateur et qui génèrent sur le dispositif de détection un signal diffracté numérique, qui se présente sous forme d'un code binaire constitué d'une pluralité de taches lumineuses allumées ou éteintes émises par chaque cellule de codage, indiquant la position du support diffractif.

L'intérêt d'un code binaire numérique est multiple : à titre essentiel, il facilite la détection du code et rend le traitement du signal plus rapide.

Selon une possibilité, la surface apte à détecter un contact en vue de reconnaître la zone de l'écran touchée, et donc l'organe de contrôle ou de commande virtuel activé, est une dalle tactile constituée de capteurs de surface capacitifs.

Alternativement, cette surface peut être balayée par un système radar émettant en permanence un signal sous forme d'une nappe infrarouge. Dans ce dernier cas, de préférence, le système radar à infrarouge est placé au voisinage d'une bordure de l'écran, sur la façade du boîtier, n'altérant dès lors pas la compacité de l'ensemble du système.

La mesure de l'emplacement de l'organe de commande ou de contrôle virtuel activé sur l'écran s'effectue dans ce cas soit par mesure du temps de propagation des rayons incidents et réfléchis, soit par mesure de leur angle par rapport au "capteur" source de la nappe infrarouge.

Ces moyens de mesure doivent effectuer une mise en correspondance bijective d'un secteur de la surface externe de l'écran d'une part et d'une commande ou d'un contrôle à effectuer d'autre part. C'est la raison pour laquelle la disposition réelle des icones des commandes virtuelles est prévue selon le moyen de mesure choisi.

Ainsi, s'il s'agit d'une mesure de l'angle, aucune des zones comportant un organe de commande ou de contrôle virtuel ne doit avoir le même angle par rapport à la source du rayonnement infrarouge. Dans l'hypothèse d'une mesure du temps, chaque organe virtuel doit être prévu à une distance différente de ladite source.

Le dispositif de l'invention comporte enfin une unité électronique de traitement et de contrôle des informations en provenance de la dalle capacitive ou de la nappe infrarouge d'une part, du joystick d'autre part, ainsi que du dispositif de détection du capteur de position optique du support diffractif s'il existe.

En d'autres termes, cette unité gère à titre principal deux types d'informations : en premier lieu, l'image affichée à l'écran, qui correspond à la position à la fois du joystick et du support diffractif, et en second lieu le secteur activé sur ledit écran par l'utilisateur, cette dernière information étant fournie par la dalle capacitive ou la nappe infrarouge.

Parmi les multiples avantages du dispositif de l'invention, il est à noter qu'il ne nécessite qu'un traitement électronique extrêmement simplifié, qui ne gère en réalité à titre principal que des tableaux à deux colonnes mettant en correspondance une position (joystick, support diffractif, doigt sur l'écran) et une information (affichage d'image, action) lui correspondant bijectivement.

L'invention va à présent être décrite plus en détail, en référence aux figures annexées, pour lesquelles :
- la figure 1 représente en coupe schématique un dispositif à écran tactile selon la présente invention ;
- la figure 2 montre un schéma synoptique simplifié du système de l'invention, reprenant les fonctions organisées par les composants de la configuration de la figure 1 ;
- la figure 3 est une représentation simplifiée de la façade d'un dispositif selon l'invention dans un premier état de la manette de sélection, dans une configuration à radar infrarouge ; et
- la figure 4 reprend les éléments de la figure 3, montrant un second positionnement de la manette, pour une configuration à dalle capacitive.

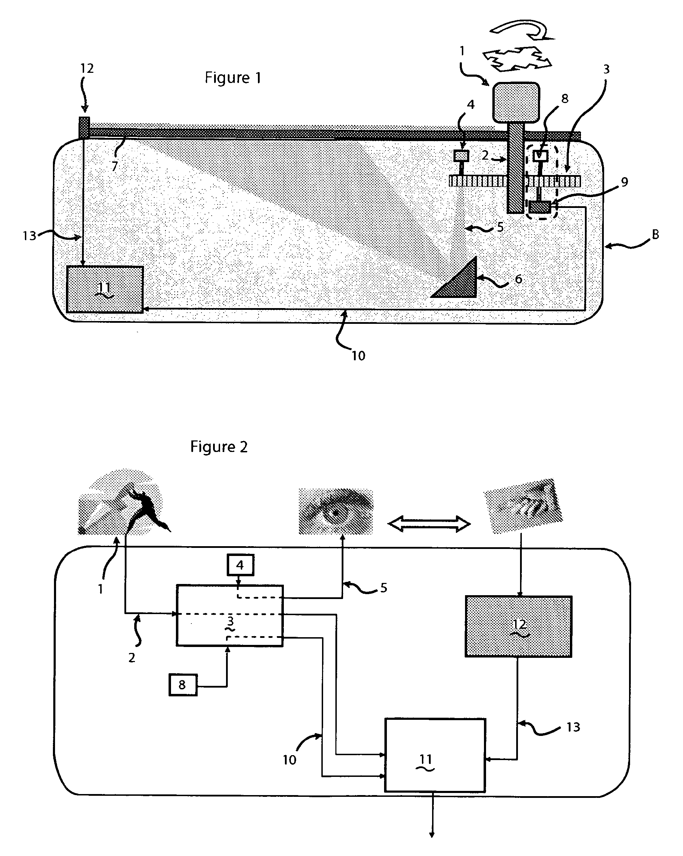

En référence à la figure 1, le joystick (1) communique - via un arbre (2) - des déplacements tels que symbolisés au-dessus de la manette (1) à un support diffractif (3) disposé dans un boîtier (B).

Une source de lumière, en l'espèce une diode laser (4), émet un faisceau à destination du support diffractif (3) en vue de la génération d'un signal diffracté (5) émis en direction d'un composant réfléchissant (6) qui renvoie ledit signal vers un écran (7) placé au niveau de la façade du boîtier (B).

Selon la position du support diffractif (3), et donc du secteur codé dudit support (3) qui interfère avec le rayon laser émis par la diode (4), l'image apparaissant sur l'écran (7) change.

La simplicité du dispositif résulte de l'utilisation d'une technologie diffractive : le signal diffracté bénéficie d'une grande stabilité dans l'espace, et ne nécessite pas de mise au point particulière. D'où l'utilisation d'un simple composant réfléchissant (6), ou la possibilité d'utilisation d'un écran recourbé, etc...

Le lien mécanique réalisé par l'arbre (2) permet une mise en correspondance biunivoque entre la position de la manette ou joystick (1) d'une part et celle du support diffractif (3) d'autre part, associant une unique image sur l'écran (7) à chaque position du joystick (1).

Un dispositif additionnel comportant une diode (8) émettant un second rayonnement laser à destination du support diffractif (3), et comportant par ailleurs un dispositif de détection (9), confirme le positionnement dudit support (3). Il s'agit d'un capteur de position optique traditionnel, fonctionnant par conséquent sans contact, comprenant des cellules de codage disposées sur le support diffractif (3), par exemple des hologrammes générés par ordinateur, qui interfèrent avec le faisceau émis par la diode (8) en vue de générer un signal diffracté sous forme d'un code optique numérique dont la lecture sur le dispositif de détection (9) permet également d'associer de manière unique un positionnement du support (3) au code détecté. Le code est ensuite traité, via la liaison (10), par une unité électronique de traitement (11) qui associe à chaque code - via un tableau à deux dimensions - un positionnement unique du support (3), et donc une unique image projetable sur l'écran (7).

Un radar ou capteur (12) émet un signal sous forme d'une nappe infrarouge qui balaye la surface de l'écran (7), et permet le repérage de la position du doigt d'un utilisateur mis au contact d'une zone de l'écran couverte par le balayage.

L'analyse de cette position, effectuée comme mentionnée ci-dessus par mesure angulaire ou de temps, permet de savoir quelle partie de l'image est touchée, et par conséquent quelle action l'utilisateur a voulu effectuer. Le signal permettant ce traitement est envoyé via une liaison (13) à l'unité électronique (11).

Le fonctionnement de l'ensemble est symbolisé en figure 2 : une action sur l'écran détectée par le capteur (12), basé sur une technologie à infrarouge dans l'hypothèse prévue dans la figure 1 mais qui peut également être une dalle à technologie capacitive, génère un signal qui est envoyé vers l'unité électronique (11).

Le support diffractif (3) reçoit des informations de la part de trois sources : en premier lieu, d'un premier faisceau laser émis par la diode (4), permettant la création sur l'écran (7) d'une image visible par l'utilisateur. En second lieu, d'un second faisceau laser issu de la diode (8), permettant la mesure précise du positionnement du support (3) et transmis via la connexion (10) à l'unité électronique (11). Enfin, du joystick (1), dont la position est mécaniquement transmise par l'arbre (2), et qui donne lieu - par exemple par la connaissance de l'image projetée - à une information sur le positionnement dudit joystick (1).

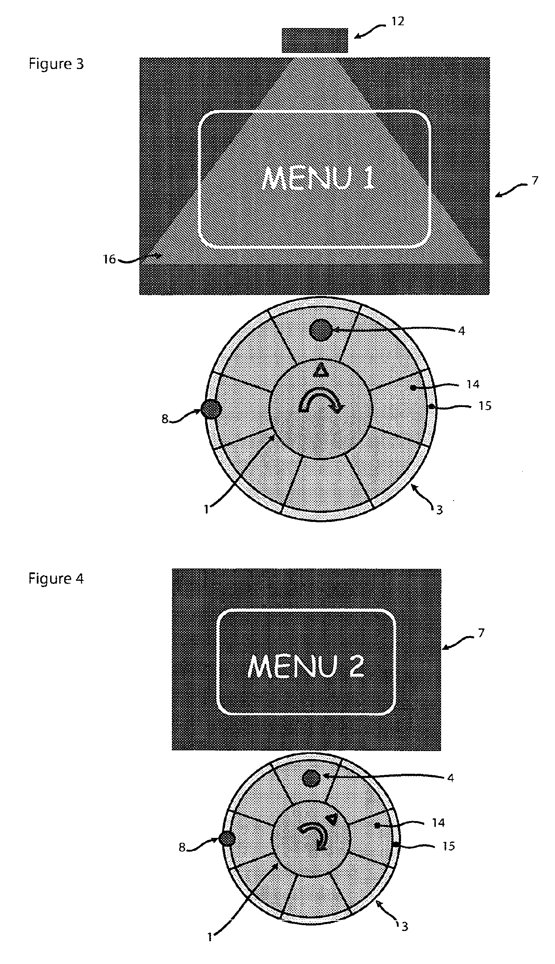

La configuration des figures 3 et 4 est simplifiée dans la mesure où le joystick (1) prend ici la forme d'une molette purement rotative.

Dans la configuration de la figure 3, cette molette (1) est représentée dans une première position, faisant correspondre le premier faisceau laser issu de la diode (4) à un secteur particulier du support (3) donnant naissance à une première image visualisable sur l'écran (7). Celle-ci est symbolisée par la représentation de "menu 1" sur la figure 3. L'image telle que représentée sur l'écran (7) est codée sur une partie du disque schématiquement référencé (14) et qui contient une succession d'un nombre n de secteurs codés correspondant au nombre n d'images à projeter. En l'espèce, la configuration représentée est rotative, et le support diffractif (3) est présenté sous forme d'un disque. En périphérie de la zone (14), une zone annulaire (15) permet le codage du positionnement précis du disque (3), détecté à l'aide du second faisceau laser émis par la diode (8) et qui interfère avec la zone annulaire (15). Celle-ci comprend typiquement une succession de cellules de codage de la position, correspondant également au nombre d'images et donc au nombre de positions discrètes que peut prendre la molette (1).

Le capteur (12) représenté en figure 3 utilise une technologie infrarouge et fonctionne comme expliqué auparavant, à la manière d'un radar émettant une nappe qui balaye une partie de la surface de l'écran. Celle-ci apparaît sous une forme triangulaire référencée (16), ou plus précisément sous la forme d'un secteur angulaire.

La figure 4 représente le même dispositif dans une position différente de la molette (1), faisant apparaître une autre image sur l'écran (7) (représenté par l'affichage de "menu 2").

Dans l'hypothèse de la figure 4, en l'absence d'un "radar" à infrarouge (12), la gestion des contacts entre le doigt de l'utilisateur et les zones comportant les organes de commande et de contrôle virtuels s'effectue à l'aide d'une dalle capacitive (non représentée). Dans les deux cas, la détermination de la position du doigt, et donc de la commande virtuelle actionnée, s'effectue par des techniques connues en soi.

D'autres variantes, qui ne sont pas explicitement décrites en référence aux figures pourraient être mises en oeuvre. Ainsi en va-t-il par exemple d'une manette (1) fonctionnant à la manière d'un joystick, c'est-à-dire ayant plus de degrés de liberté que la molette représentée aux figures 3 et 4. Par ailleurs, le support diffractif (3) n'est pas nécessairement un disque. D'autres variantes de formes de ces types sont envisageables.

## Revendications

1. Dispositif permettant d'afficher une image correspondant à des organes de commande ou de contrôle virtuels, l'image étant obtenue par diffraction d'un premier faisceau laser sur un support diffractif doté d'un secteur présentant le codage de l'image à projeter, **caractérisé en ce qu'**il comporte un écran (7) tactile muni d'une manette de sélection (1) mécanique multi positions dont l'activation permet le changement d'une image affichée sur l'écran (7), laquelle comporte des organes de commande ou de contrôle virtuels à activation tactile, l'écran (7) étant muni de moyens (12) pour la détection sur sa surface d'un contact et de l'emplacement de ce contact, le support diffractif (3) étant mobile et doté de secteurs présentant chacun le codage d'une image à projeter sur l'écran (7), et le déplacement du support diffractif (3) étant commandé par la manette de sélection (1) selon plusieurs positions discrètes permettant l'interférence d'un secteur avec le faisceau laser.

2. Dispositif à écran tactile selon l'une des revendications précédentes, **caractérisé en ce que** la manette de sélection consiste en une molette (1) rotative entrainant un arbre (2) auquel est solidarisé un disque (3) formant le support diffractif.

3. Dispositif à écran tactile selon la revendication précédente, **caractérisé en ce que** la molette (1) est placée en bordure de l'écran (7) placé au niveau de la façade du boîtier (B) du dispositif, l'arbre (2) étant orienté perpendiculairement au dit écran (7) et au support diffractif (3), parallèlement au premier faisceau laser dont l'émetteur (4) est placé au voisinage de ladite façade, le signal diffracté (5) par le support diffractif (3) étant envoyé vers une surface réfléchissante (6) placée au voisinage du fond du boîtier (B) et orientée pour réfléchir ledit signal (5) en direction de l'écran (7).

4. Dispositif à écran tactile selon l'une des revendications 2 et 3, **caractérisé en ce que** la molette (1) et l'arbre (2) qui lui est solidarisé sont déplaçables dans plusieurs directions radiales, formant ainsi une manette de type joystick (1), chaque position radiale du joystick fournissant une information redondante avec une information résultant de l'activation d'un organe de commande ou de contrôle virtuel affiché sur l'écran (7) correspondant à la position angulaire de la molette (1).

5. Dispositif à écran tactile selon l'une quelconque des revendications précédentes, **caractérisé en ce qu'**il comporte un capteur de position optique apte à mesurer la position du support diffractif (3) et constitué d'une source de lumière (8) émettant un second faisceau laser interférant avec des zones du support diffractif (3) distinctes de celles qui interfèrent avec le premier faisceau laser, lesdites zones comprenant des cellules de codage de la position du support diffractif (3), le signal diffracté étant détecté par un dispositif de détection (9).

6. Dispositif à écran tactile selon la revendication précédente, **caractérisé en ce que** les cellules de codage sont constituées par des hologrammes générés par ordinateur et qui génèrent sur le dispositif de détection un signal diffractif numérique se présentant sous forme d'un code binaire constitué d'une pluralité de taches lumineuses allumées ou éteintes émises par chaque cellule de codage, indiquant la position du support diffractif (3).

7. Dispositif à écran tactile selon l'une des revendications précédentes, **caractérisé en ce que** la surface apte à détecter un contact en vue de reconnaître la zone de l'écran touchée et donc l'organe de contrôle ou de commande virtuel activé, est une dalle tactile constituée de capteurs de surface capacitifs.

8. Dispositif à écran tactile selon l'une des revendications 1 à 6, **caractérisé en ce que** la surface apte à détecter un contact en vue de reconnaître la partie d'écran et donc l'organe de contrôle ou de commande virtuel activé est balayée par un système radar (12) émettant en permanence un signal sous forme d'une nappe infrarouge (16).

9. Dispositif à écran tactile selon la revendication 8, **caractérisé en ce que** le système radar (12) à infrarouge est placé au voisinage d'une bordure de l'écran (7), sur la façade du boîtier (B) du dispositif.

10. Dispositif à écran tactile selon l'une des revendications 8 et 9 **caractérisé en ce que** la mesure de l'emplacement de l'organe de commande ou de contrôle virtuel activé sur l'écran s'effectue soit par mesure du temps de propagation des rayons incidents et réfléchis, soit par mesure de leur angle par rapport à la source (12) de la nappe infrarouge.

11. Dispositif à écran tactile selon l'une des revendications 8 et 9, **caractérisé en ce qu'**il comporte une unité électronique (11) de traitement et de contrôle des informations en provenance de la dalle capacitive ou de la nappe infrarouge, du joystick (1) ainsi que du dispositif de détection (9) du capteur de position du support diffractif (3).

12. Dispositif à écran tactile selon la revendication précédente, **caractérisé en ce que** l'écran (7) est éteint en l'absence de manipulation de l'organe de sélection (1) mécanique.

## Claims

1. Device permitting the display of an image corresponding to control members or virtual controls, the image being obtained by diffraction of a first laser beam on a diffractive support having a sector which presents the coding of the image to be projected, **characterised in that** it comprises a touch screen (7) provided with a mechanical multi-position selector handle (1), the activation of which permits changing of an image displayed on the screen (7), which comprises control members or virtual controls for tactile activation, the screen (7) being provided with means (12) for the detection of contact on its surface and of the site of this contact, the diffractive support (3) being movable and having sectors which each present the coding of an image to be projected onto the screen (7), and displacement of the diffractive support (3) being controlled by the selector handle (1) according to several discrete positions permitting interference of a sector with the laser beam.

2. Touch screen device according to any of the preceding claims, **characterised in that** the selector handle consists of a rotary knob (1) driving a shaft (2) to which is integrally connected a disc (3) forming the diffractive support.

3. Touch screen device according to the preceding claim, **characterised in that** the knob (1) is placed at the edge of the screen (7) placed at the level of the front of the housing (B) of the device, the shaft (2) being oriented perpendicularly to said screen (7) and to the diffractive support (3), parallel to the first laser beam of which the emitter (4) is placed in the vicinity of said front, the signal diffracted (5) by the diffractive support (3) being transmitted towards a reflective surface (6) placed in the vicinity of the back of the housing (B) and oriented to reflect said signal (5) in the direction of the screen (7).

4. Touch screen device according to either of claims 2 and 3, **characterised in that** the knob (1) and the shaft (2) which is integrally connected thereto are displaceable in several radial directions, thus forming a joystick-type handle (1), each radial position of the joystick providing redundant information with information resulting from the activation of a control member or virtual control displayed on the screen (7) corresponding to the angular position of the knob (1).

5. Touch screen device according to any of the preceding claims, **characterised in that** it comprises an optical position sensor capable of measuring the position of the diffractive support (3) and consisting of a light source (8) emitting a second laser beam interfering with areas of the diffractive support (3) separate from those which interfere with the first laser beam, said areas including cells for coding the position of the diffractive support (3), the diffracted signal being detected by a detection device (9).

6. Touch screen device according to the preceding claim, **characterised in that** the coding cells consist of computer-generated holograms which generate on the detection device a digital diffractive signal which is in the form of a binary code consisting of a plurality of on or off light spots emitted by each coding cell, indicating the position of the diffractive support (3).

7. Touch screen device according to any of the preceding claims, **characterised in that** the surface capable of detecting contact for the purpose of recognising the screen area which has been touched and therefore the control member or virtual control which has been activated, is a touchpad consisting of capacitive surface sensors.

8. Touch screen device according to any of claims 1 to 6, **characterised in that** the surface capable of detecting contact for the purpose of recognising the screen section and therefore the control member or virtual control which has been activated, is swept by a radar system (12) permanently emitting a signal in the form of an infrared layer (16).

9. Touch screen device according to claim 8, **characterised in that** the infrared radar system (12) is placed in the vicinity of an edge of the screen (7), on the front of the housing (B) of the device.

10. Touch screen device according to either of claims 8 and 9, **characterised in that** measurement of the site of the control member or virtual control that has been activated on the screen is effected either by measurement of the propagation time of incident and reflected beams, or by measurement of the angle thereof relative to the source (12) of the infrared layer.

11. Touch screen device according to either of claims 8 and 9, **characterised in that** it comprises an electronic unit (11) for processing and control of the information from the capacitive pad or the infrared layer, from the joystick (1) as well as from the device (9) for detection of the position sensor for the diffractive support (3).

12. Touch screen device according to the preceding claim, **characterised in that** the screen (7) is off in the absence of manipulation of the mechanical selection member (1).

## Patentansprüche

1. Vorrichtung zum Anzeigen eines Bildes, das virtuellen Steuer- bzw. Kontrolleinrichtungen entspricht, wobei das Bild durch Beugung eines ersten Laserstrahls an einer Beugungsblende gewonnen wird, die mit einem die Codierung des zu projizierenden Bildes aufweisenden Sektor versehen ist, **dadurch gekennzeichnet, dass** sie einen Berührungsbildschirm (7) enthält, der mit einem mechanischen Multipositions-Auswahlhebel (1) versehen ist, dessen Aktivierung den Wechsel eines auf dem Bildschirm (7) angezeigten Bildes ermöglicht und die virtuelle Steuer- bzw. Kontrolleinrichtungen mit Berührungsaktivierung enthält, wobei der Bildschirm (7) mit Mitteln (12) zum Erfassen eines Kontakts auf seiner Oberfläche und der Stelle dieses Kontakts ausgestattet ist, wobei die Beugungsblende (3) verstellbar ist und mit Sektoren ausgestattet ist, die jeweils die Codierung eines auf den Bildschirm (7) zu projizierenden Bildes aufweist, und wobei die Verstellung der Beugungsblende (3) über den Auswahlhebel (1) in mehreren Einzelstellungen gesteuert wird, welche die Interferenz eines Sektors mit dem Laserstrahl ermöglichen.

2. Vorrichtung mit Berührungsbildschirm nach dem vorangehenden Anspruch, **dadurch gekennzeichnet, dass** der Auswahlhebel aus einem drehbaren Rädchen (1) besteht, das eine Welle (2) antreibt, mit der eine die Beugungsblende bildende Scheibe (3) fest verbunden ist.

3. Vorrichtung mit Berührungsbildschirm nach dem vorangehenden Anspruch, **dadurch gekennzeichnet, dass** das Rädchen (1) am Rande des Bildschirms (7) angeordnet ist, der im Bereich der Stirnseite des Gehäuses (B) der Vorrichtung angeordnet ist, wobei die Welle (2) senkrecht zum Bildschirm (7) und zur Beugungsblende (3) und dabei parallel zum ersten Laserstrahl (4) ausgerichtet, dessen Sender (4) benachbart zur Stirnseite angeordnet ist, wobei das über die Beugungsblende (3) gebeugte Signal (5) zu einer reflektierenden Fläche (6) gesendet wird, die benachbart zum Boden des Gehäuses (B) angeordnet und so ausgereichtet ist, dass sie das Signal (5) in Richtung des Bildschirms (7) reflektiert.

4. Vorrichtung mit Berührungsbildschirm nach einem der Ansprüche 2 und 3, **dadurch gekennzeichnet, dass** das Rädchen (1) und die Welle (2), die fest mit diesem verbunden ist, in mehreren radialen Richtungen verstellbar sind und somit eine Handhabe vom Typ Joystick (1) bilden, wobei jede radiale Stellung des Joysticks eine Information liefert, die mit einer Information redundant ist, die sich aus der Aktivierung einer virtuellen Steuer- bzw. Kontrolleinrichtung ergibt, die am Bildschirm (7) angezeigt wird und der Winkelstellung des Rädchens (1) entspricht.

5. Vorrichtung mit Berührungsbildschirm nach einem der vorangehenden Ansprüche, **dadurch gekennzeichnet, dass** es einen optischen Lagesensor enthält, welcher die Stellung der Beugungsblende (3) messen kann und aus einer Lichtquelle (8) besteht, die einen zweiter Laserstrahl aussendet, der mit Bereichen der Beugungsblende (3) interferiert, die sich von denjenigen unterscheiden, die mit dem ersten Laserstrahl interferieren, wobei die genannten Bereiche Zellen zum Codieren der Stellung der Beugungsblende (3) aufweisen und das gebeugte Signal von einer Erfassungsvorrichtung (9) erfasst wird.

6. Vorrichtung mit Berührungsbildschirm nach dem vorangehenden Anspruch, **dadurch gekennzeichnet, dass** die Codierungszellen aus Hologrammen bestehen, die vom Computer erstellt werden und bei der Erfassungsvorrichtung ein gebeugtes digitales Signal erzeugen, das in Form eine Binärcodes vorliegt, der aus einer Mehrzahl von aufleuchtenden bzw. erloschenen Lichtflecken besteht, die von jeder Codierungszelle emittiert werden und die Stellung der Beugungsblende (3) angeben.

7. Vorrichtung mit Berührungsbildschirm nach einem der vorangehenden Ansprüche, **dadurch gekennzeichnet, dass** die Fläche, die einen Kontakt erfassen kann, um den berührten Bereich des Bildschirms und damit die aktivierte virtuelle Kontroll- bzw. Steuereinrichtung zu ermitteln, eine Berührungsscheibe ist, die aus kapazitiven Flächensensoren besteht.

8. Vorrichtung mit Berührungsbildschirm nach einem der Ansprüche 1 bis 6, **dadurch gekennzeichnet, dass** die Fläche, die einen Kontakt zum Ermitteln des Bildschirmabschnitts und damit der aktivierten virtuellen Kontroll- bzw. Steuereinrichtung erfassen kann, von einem Radarsystem (12) abgetastet wird, das stetig ein Signal in Form einer Infrarotschicht (16) ausgibt.

9. Vorrichtung mit Berührungsbildschirm nach Anspruch 8, **dadurch gekennzeichnet, dass** das Infrarot-Radarsystem (12) benachbart zu einer Randkante des Bildschirms (7) an der Stirnseite des Gehäuses (B) der Vorrichtung angeordnet ist.

10. Vorrichtung mit Berührungsbildschirm nach einem der Ansprüche 8 und 9, **dadurch gekennzeichnet, dass** die Messung der Stelle der aktivierten virtuellen Steuer- bzw. Kontrolleinrichtung am Bildschirm entweder durch Messen der Laufzeit der einfallenden und reflektierten Strahlen oder durch Messen ihres Winkels bezüglich der Quelle (12) der Infrarotschicht erfolgt.

11. Vorrichtung mit Berührungsbildschirm nach einem der Ansprüche 8 und 9, **dadurch gekennzeichnet, dass** sie eine elektronische Einheit (11) zum Verarbeiten und Prüfen der Informationen enthält, die von der kapazitiven Scheibe oder von der Infrarotschicht, dem Joystick (1) sowie von der Erfassungsvorrichtung (9) des Lagesensors der Beugungsblende (3) stammen.

12. Vorrichtung mit Berührungsbildschirm nach dem vorangehenden Anspruch, **dadurch gekennzeichnet, dass** der Bildschirm (7) bei ausbleibender Betätigung der mechanischen Auswahleinrichtung (1) ausgeschaltet wird.
